# EUROPEAN PATENT SPECIFICATION

(11) **EP 1 024 642 B1**
(45) Date of publication and mention of the grant of the patent: **03.08.2005**
(21) Application number: 99310504.8
(22) Date of filing: 23.12.1999
(51) Int. Cl.: H04L 29/06, H04L 12/56

(54) **Method and apparatus for dynamically controlling the provision of differentiated services**
Verfahren und Vorrichtung zur dynamischen Steuerung der Bereitstellung von differenzierter Diensten
Procédé et appareil pour contrôler de façon dynamique la mise à disposition de services différenciés

(30) Priority: 28.12.1998 US 222340
(43) Date of publication of application: 02.08.2000
(73) Proprietor: Nortel Networks Limited, St. Laurent, Quebec H4S 2A9 (CA)
(72) Inventor: Terrell, William F., Tyngsboro, Massachusetts 01879 (US); Luciani, James V., Concord, Massachusetts 01742 (US)
(74) Representative: Wombwell, Francis

(56) References cited:
- BARZILAI T P ET AL: "DESIGN AND IMPLEMENTATION OF AN RSVP-BASED QUALITY OF SERVICE ARCHITECTURE FOR AN INTEGRATED SERVICES INTERNET" IEEE JOURNAL ON SELECTED AREAS IN COMMUNICATIONS, IEEE INC. NEW YORK, US, vol. 16, no. 3, 1 April 1998 (1998-04-01), pages 397-413, XP000740059 ISSN: 0733-8716
- WITTIG H ET AL: "NETWORK LAYER SCALING: CONGESTION CONTROL IN MULTIMEDIA COMMUNICATION WITH HETEROGENOUS NETWORKS AND RECEIVERS" MULTIMEDIA TRANSPORT AND TELESERVICES. INTERNATIONAL COST 237 WORKSHOPPROCEEDINGS. VIENNA, NOV. 13 - 15, 1994, INTERNATIONAL COST 237 WORKSHOP PROCEEDINGS, BERLIN, SPRINGER, DE, 13 November 1994 (1994-11-13), pages 274-293, XP000585306 ISBN: 3-540-58759-4
- BALACHANDRAN A ET AL: "Active filters: delivering scaled media to mobile devices" NETWORK AND OPERATING SYSTEM SUPPORT FOR DIGITAL AUDIO AND VIDEO, 1997., PROCEEDINGS OF THE IEEE 7TH INTERNATIONAL WORKSHOP ON ST. LOUIS, MO, USA 19-21 MAY 1997, NEW YORK, NY, USA,IEEE, US, 19 May 1997 (1997-05-19), pages 125-134, XP010251692 ISBN: 0-7803-3799-9
- REARDON M: "TRAFFIC SHAPERS: IP IN CRUISE CONTROL" DATA COMMUNICATIONS, MCGRAW HILL. NEW YORK, US, vol. 27, no. 13, 21 September 1998 (1998-09-21), pages 66,68-73, XP000785256 ISSN: 0363-6399

## Description

### COPYRIGHT NOTICE

A portion of the disclosure of this patent document contains material which is subject to copyright protection. The copyright owner has no objection to the facsimile reproduction by anyone of the patent document or the patent disclosure, as it appears in the Patent and Trademark Office patent file or records, but otherwise expressly reserves all rights whatsoever in said copyright works.

### BACKGROUND OF THE INVENTION

### 1. Field of the Invention

The present invention relates to the field of data networking and, in particular, to a method and apparatus for dynamically controlling the provision of differentiated services.

### 2. Background Information

As computer technology has evolved, so too has the use of networks which communicatively couple computer systems together enabling them to communicate with one another. One of the more popular of such computer networks is colloquially referred to as the Internet, which is an internetworking of a number of publicly accessible networks and servers distributed throughout the world. The Internet provides the communication means by which individual enterprise networks (e.g., Local Area Networks (LANs), Wide Area Networks (WANs), and the like), servers and other network devices communicate with one another. Individually, the networks/servers comprising the Internet come in many different topologies, employing a corresponding number of alternative communication technologies. One of the profound advantages of the Internet is that communication at the network layer is standardized around a standard set of communication protocols commonly referred to as the Internet communication suite. By adhering to the Internet communication suite, any network device can communicate with any other network device, effectively creating a single, seamless ubiquitous network.

Once the domain of government agencies and academic institutions, the Internet has grown to become a form of entertainment in many parts of the world, as well as a source of commerce. However, the increased popularity of the Internet has also revealed some of its limitations. One such limitation is bandwidth management. That is to say, the increased popularity of the Internet has resulted in increased congestion, for which the Internet is ill-equipped to manage.

One reason for the Internet's limited ability to manage congestion centers around its "best-effort" service level paradigm. Simply stated, in communicating data packets from one network device to another, each intervening network device processes data traffic in the order in which it was received and selects the best route currently available to deliver the data packets to its destination. If a network device is overburdened, or the data packets are corrupted in transit (e.g., due to noise or other factors), the data packets may be dropped requiring re-transmission. While dropped or re-transmitted data packets are not a problem for many applications, it does pose a problem for multimedia applications executing over the Internet. Moreover, the best-effort service level of the Internet does not take into account that certain data packets are more time-sensitive than others.

To illustrate this last point, consider for example computer telephony applications, the so-called Internet telephones. The speech quality and cognition provided by computer telephony applications are heavily dependent upon a network's ability to transmit data packets from the source to the destination in a near real-time fashion, without dropping packets or otherwise requiring re-transmission. Dropped or re-transmitted data packets may well result in choppy, unintelligible speech at the receiving end of the communication.

To overcome the limitations of the best-effort service paradigm, the Internet Engineering Task Force (IETF), an association of networking professionals, have proposed inclusion of differentiated services in the Internet standard, providing different levels of service within the bandwidth of the Internet. Differentiated services enable an application/network device/enterprise network/etc. to reserve communication bandwidth with which to facilitate transmission of data packets between a source and destination. Those skilled in the art will recognize that reserving bandwidth using the differentiated services paradigm comes at a cost. That is, Internet Service Providers (ISP) and other Internet access points charge a premium to secure and dedicate bandwidth to individual clients/applications. Even if there is not a per-use coat associated with the use of differentiated services, there is an inherent cost in dedicating equipment on a per-port basis to support such differentiated services. Consequently, simply adding more parts to alleviate congestion and provide differentiated services is a costly solution.

To more effectively manage the costly resources required to provide differentiated services, it is known to install filters on network edge devices which control the provision of differentiated services. Thus, rather than simply dedicating bandwidth to support a service level between two networks, a such bandwidth is not allocated until such time as network traffic satisfying filter criteria is detected. One skilled in the art will appreciate, however that the network devices can quickly become over-burdened with such filters.

BARZILAI et al., in "Design and Implementation of an RSVP Quality of Service Architecture for an Integrated Services Internet", IEEE Journal on Selected Areas in Communication, April 1998, ISSN: 0733-8716 discloses a design and architecture for a communication resource management to support QoS. WITTIG et al., in "Network Layer Scaling: Congestion Control in Multimedia Communication with Heterogenous Networks and Receivers", International Cost 237 Workshop Proceedings, November 1994, ISBN: 3-540-58759-4 discloses a technique for network layer scaling. A router detects situations in which a resource is becoming overloaded and reports this to its scaler (WITTIG, page 281). The scaler then sends a message to other routers or senders to scale the traffic accordingly. The term "filter" as used by WITTIG merely denotes a media scaling device between a data source and a data sink to reduce bandwidth by dropping packets of a multimedia stream (WITTIG, page 276).

A method and apparatus for dynamically controlling the provision of differentiated services is presented, unencumbered by the deficiencies and inherent limitations commonly associated with the network devices of the prior art. It will be apparent to those skilled in the art, from the description to follow, that the present invention achieves these and other desired results.

### SUMMARY OF THE INVENTION

According to the present invention there is provided an apparatus used in communication between a client device and a remote device as set forth in claim 1.

Also according to the present invention there is provided a method for controlling provision of differentiated services in a data network as claimed in claim 18.

Further embodiments according to the present invention are defined in independent claims 2-17 and 19-24.

### BRIEF DESCRIPTION OF DRAWINGS

The present Invention will be described by way of exemplary embodiments, but not limitations, illustrated in the accompanying drawings in which like references denote similar elements, and in which:
**Figure 1** illustrates a block diagram of an example data network within which the teachings of the present invention may be practiced, in accordance with one embodiment of the present invention;
**Figure 2** illustrates a block diagram of a network device incorporating the teachings of the present invention, in accordance with one embodiment of the present invention;
**Figure 3** illustrates a flow chart of an example method for dynamically controlling the provision of differentiated services, in accordance with one embodiment of the present invention;
**Figure 4** illustrates an example communication packet suitable for use in the example network of **Figure 1**, in accordance with one embodiment of the present invention;
**Figure 5** graphically illustrates an example profile database from which trigger filters and admission profiles are dynamically generated, in accordance with one embodiment of the present invention; and
**Figure 6** illustrates a block diagram of an example network device incorporating the teachings of the present invention, in accordance with an alternate embodiment of the present invention.

### DETAILED DESCRIPTION OF THE INVENTION

In the following description, various aspects of the present invention will be described. However, it will be apparent to those skilled in the art that the present invention may be practiced with only some or all aspects of the present invention. For purposes of explanation, specific numbers and configurations are set forth in order to provide a thorough understanding of the present invention. However, it will also be apparent to those skilled in the art that the present invention may be practiced without these specific details. In other instances, well known features are omitted or simplified for clarity.

A portion of the disclosure of this patent document contains material which is subject to copyright protection. The copyright owner has no objection to the facsimile reproduction by anyone of the patent document or the patent disclosure, as it appears in the Patent and Trademark Office patent file or records, but otherwise expressly reserves all rights whatsoever in said copyright works.

In alternative embodiments, the present invention may be applicable to implementations of the invention in integrated circuits or chip sets, wireless implementations, switching systems products and transmission systems products. For purposes of this application, the terms switching systems products shall be taken to mean private branch exchanges (PBXs), central office switching systems that interconnect subscribers, toll/tandem switching systems for interconnecting trunks between switching centers, and broadband core switches found at the center of a service provider's network that may be fed by broadband edge switches or access multiplexers, and associated signaling, and support systems and services. The term transmission systems products shall be taken to mean products used by service providers to provide interconnection between their subscribers and their networks such as loop systems, and which provide multiplexing, aggregation and transport between a service provider's switching systems across the wide area, and associated signaling and support systems and services.

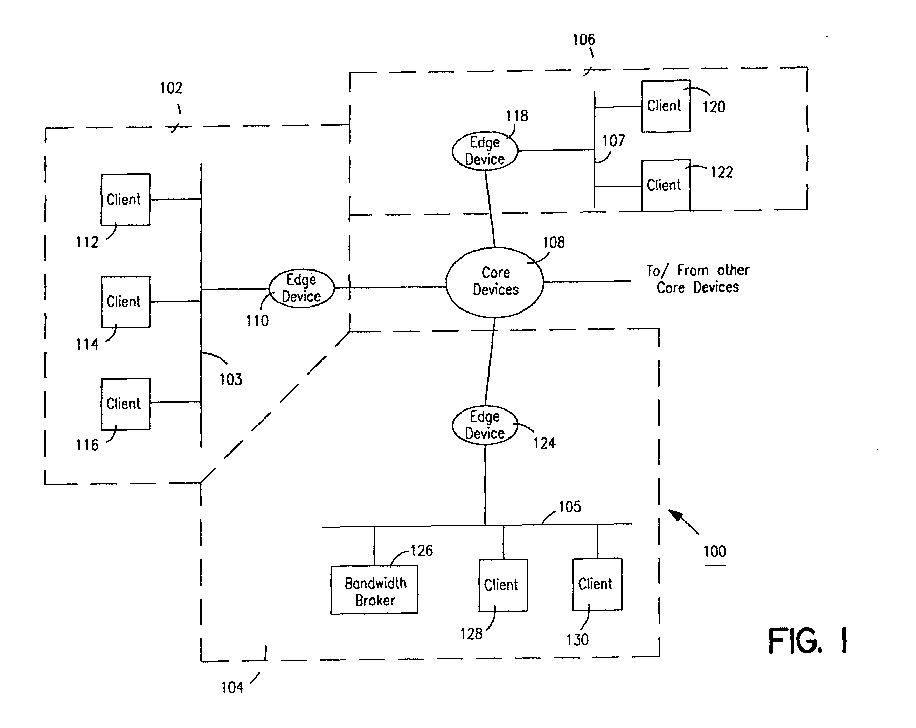

Turning to **Figure 1**, an example data network within which the teachings of the present invention arc practiced is presented, in accordance with one embodiment of the present invention. In accordance with the illustrated example embodiment of **Figure 1**, data network **100** is shown comprising a plurality of clients (**112, 114, 116, 120, 122, 128** and **130**) communicatively coupled to a network core device **108** via a network edge device (**110**, **118**, and **124**) as shown. Those skilled in the art will appreciate, from the description to follow, that network edge devices **110, 118** and/or 124 incorporating the teachings of the present invention dynamically provision the differentiated services offered by and through core device(s) **108** on an as-needed, as-authorized basis, thereby minimizing the resources required of the network edge device and the network to support differentiated services. More specifically, network edge devices **110, 118** and/or **124**, in conjunction with a bandwidth broker, dynamically create and remove filters that, when triggered, initiate an admission decision controlling provision of and access to the differentiated services of data network **100**. Accordingly, a network device incorporating the teachings of the present invention ensures that the differentiated services of data network **100** are not provisioned until they are needed and authorized, thereby preventing the allocation of unused network resources and reducing the operating cost of data network **100**. These and other aspects of the present invention will be apparent to those skilled in the art based on the description to follow.

As depicted in **Figure 1**, client computers **112**, **114** and **116** are coupled to a common network **103**, which is coupled to core device **108** via network edge device **110**. In one embodiment clients **112**, **114** and **116** along with network edge device **110** form a local area network (LAN) **102**. Similarly, clients **128** and **130**, bandwidth broker **126** and network edge device **124**, coupled via network **105** form LAN **104**, while clients **120** and **122** coupled to network edge device **118** via network **107** form LAN **106**. As shown, each of LANs **102**, **104** and **106** are coupled to a common network core device. e.g., core device **108**. In one embodiment, the combination of LANs **102**, **104** and **106** coupled to a common core device **108** form a domain of an enterprise-wide network, also commonly referred to as a wide area network (WAN) or wide area information system (WAIS). In an alternate embodiment, core device **108** is one of a plurality of network core devices comprising a global data network, e.g., the Internet.

As depicted, example data network **100** of Figure 1 is much like the typical prior art network described above, with the notable exception that access filters arc dynamically established and removed on network edge devices **110**, **118** and **124,** incorporating the teachings of the present invention, to control access to the differentiated services offered by core device **108**. The filters are installed on an as-needed, as-authorized basis, thereby preserving network resources as well as filter resources of the network edge device. Accordingly, those skilled in the art will appreciate that data network **100** is intended to represent any of a number network architectures employing any of a number of alternative communication protocols known or anticipated in the art. Thus, except for the teachings of the present invention to be described more fully below, as used herein the term network device is broadly employed to describe any of a number of alternative network devices commonly known and used in the data networking arts to support communication between network elements.

As used herein, bandwidth broker **126** of LAN **104** controls provision of differentiated services at a network level for the domain associated with core device **108**. Accordingly, bandwidth broker maintains "bandwidth pools" for each class of service supported by network core device **108**. In accordance with one embodiment of the present invention, bandwidth broker **126** also maintains an admission policy database, which correlates subscribed services to admission filters and classifier profiles that, when triggered, are installed on or removed from network edge devices incorporating the teachings of the present invention, as appropriate. Thus, in accordance with one aspect of the present invention, bandwidth broker **126** creates and removes admission filters (also referred to as access filters, or policy filters) and classifier profiles on network edge devices incorporating the teachings of the present invention, e.g., **110, 118** and/or **124** to control provision of the differentiated services offered by core device **108.** Although depicted as a separate entity, those skilled in the art will appreciate from the description to follow that bandwidth broker **126** may well be integrated with one or more of network edge devices **110,118** and/or **124**.

As used herein, clients, e.g., **112, 114, 116, 120, 122, 128** and/or **130** are intended to represent any of a number of alternative computing devices known in the art. In one embodiment, for example, clients are typical desktop computers coupled to subnetworks as is well known in the art. In an alternate embodiment clients are the so-called network computers. i.e., computers which rely on a network server for application support and hard drive storage. In an alternate embodiment, client **102** is an electronic appliance, e.g., a webTV™ Internet Terminal available from Sony Electronics, Inc, of Park Ridge, NJ, that enables one to utilize the resources of data network **100** without the need of a full-featured computer system.

In accordance with the illustrated example data network of **Figure 1**, core device(s) **108** is intended to represent any of a number of core network devices known to those skilled in the art which provide differentiated service levels of communication. In one embodiment, for example, core device **108** is a network switching center comprising a number of switches, hubs, routers and servers. In an alternate embodiment, core device **108** is a switch. In an alternate embodiment, core device **108** is a server supporting network switching and communications.

Similarly, the communication links illustrated in **Figure 1** may be any of a wide range of conventional wireline and wireless communication media, and may be different for different clients, servers, bandwidth brokers and other network devices. For example, a communication link may be a cable, a fiber optic cable, or may represent a nonphysical medium transmitting electromagnetic signals in the electromagnetic spectrum. Additionally, a wireless communication link may also include any number of conventional routing or repeating devices, such as satellites or electromagnetic signal repeaters or basestations. Irregardless of the form of communication medium, data is typically transferred between network elements using any of a number of data communication protocols. In accordance with such data communication protocols, data is generally transferred between network elements in units commonly referred to as packets, frames, datagrams and the like. Typically, each packet includes data, a source address and a target address. As will be described in greater detail below, additional control information, generally included in a header, may also be included in the packet. The number of bytes of data contained within a packet is dependent upon the communication resources of the client, the host and the network protocol employed.

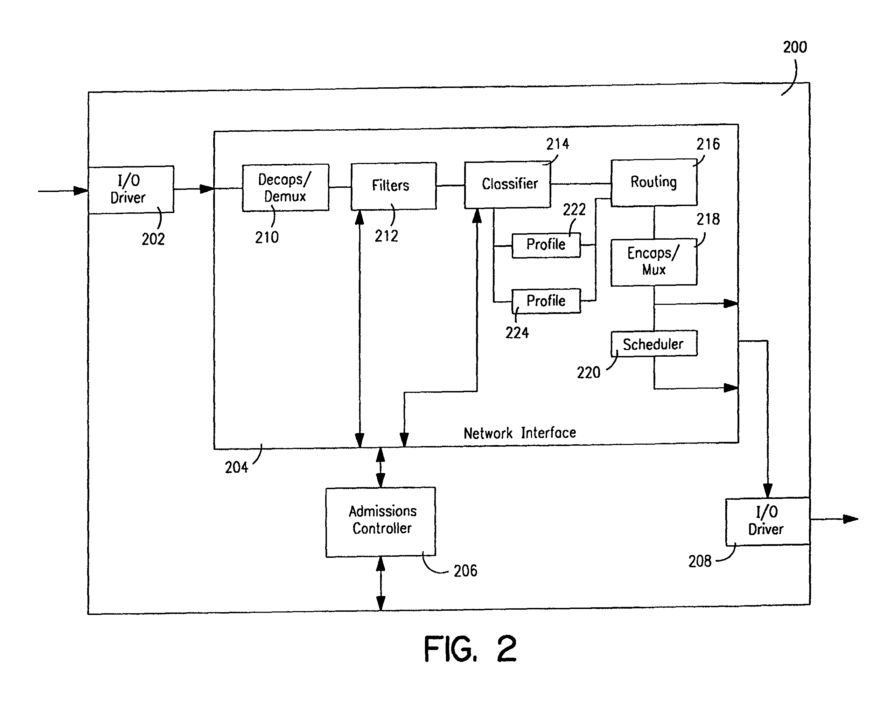

Having introduced the operating environment for the present invention, a block diagram of an example network edge device incorporating the teachings of the present invention is provided with reference to Figure 2. As depicted, Figure 2 illustrates a block diagram of an example network device 200 incorporating the teachings of the present invention, in accordance with one embodiment of the present invention. In one embodiment, network device 200 may well be beneficially incorporated into network 100 as one or more of network edge devices 110, 118 and/or 124. Further, as alluded to above, except for the teachings of the present invention, network edge device 200 is intended to represent any of a number of alternative network devices commonly used and known in the art. Thus, those skilled in the art will appreciate that the present invention may be practiced in any of a number of alternative embodiments without deviating from the scope of the present invention.

As presented in the example embodiment of Figure 2, network device 200 is shown comprising input/output drivers 202 and 208, network interface 204 and controller 206 coupled as shown. In accordance with one aspect of the present invention, to be developed more fully below, controller 206 controls the dynamic provision of filters 210 and classifier profiles 222 providing access to the differentiated services offered within the domain of resident core device(s). Although depicted as separate entities, those skilled in the art will appreciate that this is for ease of explanation only, and that controller **206** may well be incorporated as a functional block of network interface **204**. In an alternate embodiment, controller **206** may well be remotely located and communicatively coupled to network device **200** and network interface **204**. As used herein, controller **206** is intended to represent any of a number of microprocessors, microcontrollers, programmable logic devices (PLDs), application specific integrated circuits (ASICs) and the like.

As depicted in **Figure 2.** I/O driven **202** and **208** provide the physical interface between network device **200** and the client network and core network, respectively. That is, I/O driver **202** provides an interface supporting data communication (bi-directional) with clients, e.g., client **112**, while I/O driver **208** provides an interface supporting data communication (also bi-directional) with core devices. e.g., core device **108**. Such I/O devices are well known in the art and need not be further described here.

In accordance with the illustrated example embodiment of **Figure 2**, network interface **204** is shown comprising Decaps/DeMUX unit **210**, filter(s) **212** classifier **214** including profiles **222**, routing unit **216,** Encaps/Multiplexer (MUX) **218** and scheduler **220**, each communicatively coupled as shown. As shown, Decaps/DeMUX **210** receives data packets from a communicatively coupled network via I/O driver **202** and translates the data packets from the communication protocol employed by the network.

Filter(s) **212** and classifier **214** are employed to identify incoming data traffic adhering to admission policy criteria and marks the data packets with an appropriate routing classification in accordance with a predetermined differentiated services admission policy. That is, filter **212** provides an indication, or trigger, denoting when data packets are received that satisfy filter criteria. In accordance with one aspect of the present invention, the filters populating filter(s) **212** are dynamically provisioned on network interface **204** by controller **206** in accordance with a admission control policy, In one embodiment, controller **206** creates and removes specific filters from filter **212** in response to control messages from a remote bandwidth broker, e.g., bandwidth broker **126**. In an alternate embodiment, controller **206** is a bandwidth broker and creates/removes specific filters from filter **212** on its own accord, in furtherance of a admission control policy. Once in place, filter **212** issues a trigger message to controller **206** when data packets are received satisfying the criteria of an installed filter.

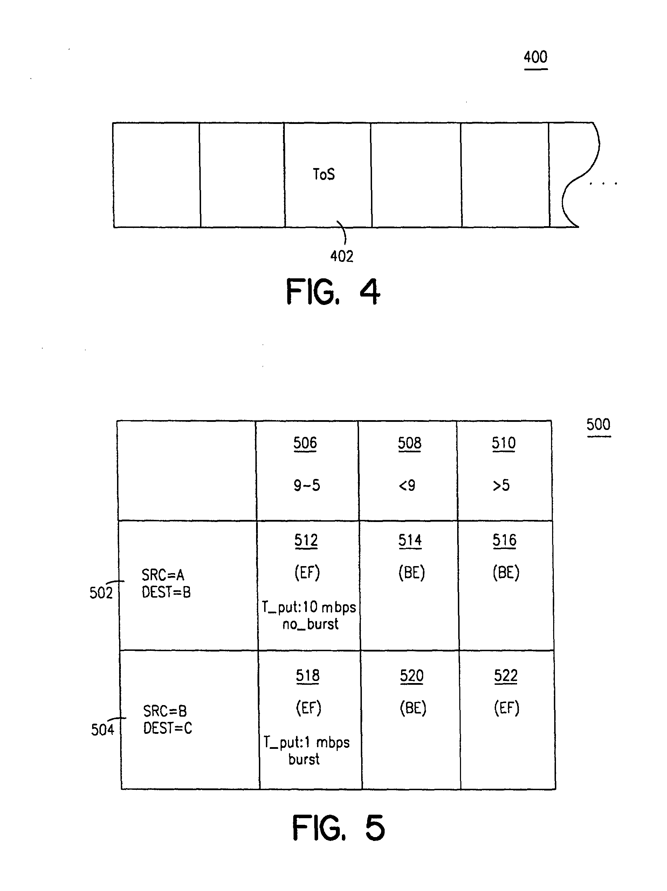

Classifier **214** functions to classify and mark data packets in accordance with their service level. In operation, once a trigger is received denoting receipt of data packets satisfying the filter criteria of at least one filter **212**, controller **206** updates the installed profiles **222** of classifier **214** such that any data packets received at classifier **214** satisfying at least one profile **222** will be marked in accordance with their subscribed service level. More specifically, in accordance with one embodiment of the present invention, the Type of Service (ToS) field in a "header" appended to the data packet is marked to denote an appropriate level of service for transmission of the data packet. One example of a header is provided with reference to **Figure 4**.

Turning briefly to **Figure 4**, a graphical illustration of an example header **400** suitable for use in conjunction with the present invention is depicted. As shown, in accordance with the illustrated example embodiment, header **400** is a byte wide, containing up to eight separate data fields. Of particular interest with respect to the present invention is the Type of Service (ToS) field **402**. Those skilled in the art will appreciate that the number of bits allocated to ToS field **402** determines number of service gradations supported by header **400**. In accordance with the illustrated example embodiment, the ToS field **402** is a one-bit field. Consequently, ToS field **402** can be marked to differentiate two levels of service, associated with a ToS field **402** entry of '0' or '1'. In one embodiment, for example, a ToS field **402** populated with a '0' denotes a best-effort service level. Accordingly, when data packets arc received which do not satisfy filter criteria, classifier **214** updates the ToS field **402** of the header appended to such data packers with a '0'. Alternatively, as will be described in greater dersil below, receipt of data packets satisfying filter **212** criteria may result in marking the ToS field **402** of the header appended to such data packets with a '1', denoting an expedited forwarding (EF) level of service. Those skilled in the art will appreciate that larger ToS fields **402** will enable header **400** to support increased gradations in service levels. Indeed, the number of service levels may increase exponentially as the number of bits allocated to ToS field **402** increases.

Returning to **Figure 2**, in accordance with one aspect of the present invention, the provision of profiles **222** to classifier **214** by controller **206** is closely monitored. That is, profiles **222** are created by controller **206** to satisfy individual flows, e.g., transmission of a number of related data packets, and are summarily removed when the flow no longer exists. Accordingly, a network device such as network device **200** incorporating the teachings of the present invention minimizes the resources dedicated to support filters and classifier profiles by allocating resource to only those filters/classifier profiles currently in use.

In addition to the foregoing, network interface **204** includes routing unit **216**, Encaps/MUX **218** and scheduler **220,** as shown. Routing unit **216** identifies and marks the data packets with routing information in accordance with the subscribed service level. Encaps/MUX **218** places the data packets in the proper format for transmission over the data network. Scheduler **220** is used to schedule transmission of data packets through I/O driver **208** in accordance with their subscribed service level, if congestion on the outgoing communication link is detected. Thus, those skilled in the art will appreciate that routing unit **216**, Encaps/MUX **218** and scheduler **220** are typical of those used in the data networking art and, thus, need not be further described.

Thus, in accordance with one aspect of the present invention, controller **206** dynamically controls the provision of filters **212** and classifier profiles **222** in accordance with a differentiated services admission policy, thereby reducing the resources dedicated to support differentiated services.

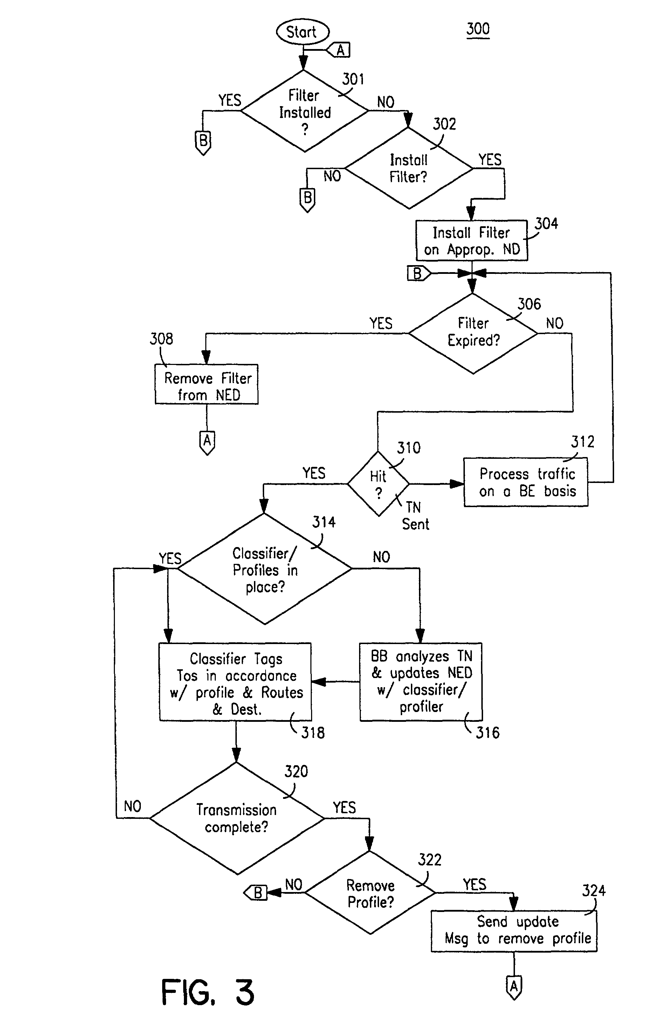

Given the foregoing architectural description, the operation of example network device **200** incorporating the teachings of the present invention will now be developed with reference to the flow chart depicted in **Figure 3**. In particular, an example method for dynamically controlling the provision of differentiated services in a data network will be developed with reference to the flow chart depicted in **Figure 3**, in accordance with one embodiment of the present invention.

For ease of explanation, and not limitation, the example method depicted in **Figure 3** will be developed in accordance with an example communication session with continued reference to **Figures 1** and **2**. Consider the following, a corporate entity has a number of distributed sites, each having their own respective local area network, e.g., LANs **102,104** and **106**. In order to link these remote sites, the corporate entity has contracted with an internet service provider (ISP) to provide premium network services between LAN **102** and LAN **106** between the hours of 9AM and 5PM via its network core device **108**.

With reference to **Figure 3**, the example method for controlling the provision of differentiated services of core device **108** begins when data packets are received by a network edge device, e.g., network edge device **110**, with an initial determination of whether a filter corresponding to the received data packets is installed. **301**. If not, a further determination is made of whether a filter need be installed on a network edge device, block **302.**

In accordance with the above example implementation, bandwidth broker **126** determines at 9AM that differentiated services have been contracted for between LAN **102** and LAN **106** and issues a setup message to install the appropriate filter an an appropriate network edge device, block **304**. More specifically, bandwidth broker **126** issues a command to controller **206** of network edge device **110** incorporating the teachings of the present invention to install a filter in filter(s) **212**. In one embodiment, the newly installed filter issues a trigger when a source of LAN **102** (e.g., clients **112, 114** and/or **116**) and a destination of LAN **106** (e.g., clients **120** or **122**) are denoted in the received data packets.

In block **306**, a determination is made as to whether any of the installed filters of filter(s) **212** have expired. If so, they are removed from the appropriate network edge device at block **308**. Thus, in accordance with one aspect of the present invention, a network edge device incorporating the teachings of the present invention allocates only those resources necessary to support filters that are currently needed, thereby reducing the overall amount of resources required of the network device. If the filter has not expired, however, it continues to monitor received data packets for a "hit", e.g., a received data packet which satisfies the filter criteria (e.g., source from LAN **102** and destination within LAN **106**), block **310**. If the received data packets do not satisfy the filter criteria at **310**, they are processed in accordance with the best-effort service paradigm, **312**. That is, if data packets are received which do not adhere to a subscribed service level, the ToS field **402** of the header **400** appended to the data packets is marked by classifier **214** to denote a best-effort service level.

If, however, the received data packets satisfy at least one installed filter **212** at **310**, a further determination is made by controller **206** of whether an appropriate classifier profile **222** is installed in classifier **214** to appropriately mark the data packets in accordance with their subscribed service level, **314.** If controller **206** determines that the necessary profile **222** is not installed, controller **206** forwards the trigger notification received from filter **212** to bandwidth broker **126** which corrclates the trigger notification with the appropriate classifier profile, and issues an update message to classifier **214** via controller **206**, block **316**. In one embodiment, in response to receiving a trigger notification from controller **206**, bandwidth broker **126** looks up the received trigger in the admissions policy database to identify an associated classifier profile **222**, **316**. Once the appropriate classifier profile **222** is identified it is sent to classifier **214** via controller **206** in an update message. Once the appropriate profile **222** has been installed in classifier **214**, classifier **214** marks the ToS field **402** of header **400** appended to the received data packets in accordance with their subscribed service level. In one embodiment, for example, ToS field **402** is marked to denote a best effort service level, and the data packets an subsequently routed in accordance with their subscribed service level **318**. At **320**, a determination is made of whether transmission is complete. If not, the method continues with block **318**.

If transmission is complete, controller **206** makes a determination of whether to remove the classifier profile **222**. In one embodiment, for example, controller **206** makes this determination in accordance with the service level it supports. For example, if profile **222** supports the highest service level, and the filter has not yet expired for that service level, controller **206** maintains the profile to support the service level with minimal delay. If however, profile **222** corresponds to a lower service level, controller **206** may remove the profile, even though the corresponding filter remains in place, to liberate network interface **204** resources. If, in **322**, a determination is made to remove the filter, controller **206** instructs classifier **214** to purge filter **222**, and an update message is sent to bandwidth broker **126** denoting the update. Subsequently, the process continues with

Thus, in accordance with the above example, controller **206** is responsible for the provision of filters **212** and classifier profiles **222** necessary to support differentiated services via network edge device **110**. In one embodiment, controller **206** relies on the information provided by a remote bandwidth broker **126** or some other policy server. In an alternate embodiment, controller **206** accesses a co-located admission policy database autonomously. Irregardless of where the admissions policy database is located, access to the differentiated services of core device **108** is dynamically controlled through the selective provision of trigger filters and classifier profiles on network devices, e.g., network device **110**, as appropriate.

Thus, one method for implementing the teachings of the present invention has been described with reference to Figures 1-4. Those skilled in the art will appreciate, however, that modifications and alterations to the network topology, header size, network elements and differentiated services admission policy can be made without deviating from the scope of the present invention. For example, in addition to the teachings above in Figure 3, controller 206 may install or remove filter(s) 212 or classifier profiles 222 based on time of day, received network traffic, and any of a number of core network operating parameters (e.g., identified faults, etc.). Indeed, such modifications and alterations to the above description are anticipated within the scope of the present invention. Having described an example network device incorporating the teachings of the present invention with reference to Figure 2, and a method of operation in Figure 3, one embodiment of an of an example admission profile database is provided with brief reference to Figure 5. Accordingly, Figure 5 illustrates an example two-dimensional admission profile database 500, wherein a network administrator establishes the filters and profiles for admission to be provisioned on appropriate network devices controlling access to differentiated services. Although represented as a two-dimensional database, those skilled in the art will appreciate that this is of ease of explanation only, and that a database of greater or lesser complexity may well be substituted for database 500 without deviating from the scope of the present invention.

With reference to Figure 5, example admission profile database 500 is shown comprising classifiers 502 and 504 and associated profiles 512-522 differentiated based on time of day indicators 506, 508 and 510. In accordance with the illustrated example embodiment, the filter established on a network edge device corresponds to an appropriate one or more of classifiers **502** and **504,** such that the filter associated with classifier **502** monitors received network traffic for data packets emanating from network A (e.g.. LAN **102**) destined for network B (e.g., LAN **106**). Accordingly, when a hit is received corresponding to classifier **502** during the hours of 9-5, profile **512** will be installed in classifier **214** of network edge device **110** of LAN **102** to mark data packets satisfying the filter criteria in accordance with their subscribed service level. In accordance with the information provided by admission control policy database **500**, such packets are marked for expedited forwarding (EF) with a throughput rate of 10Mbps, no burst in accordance with profile **512**. Packets corresponding to classifier **502** received before 9AM or after 5PM will be marked for best-effort delivery, in accordance with profiles **514** and **516**. Similarly, profiles **518-522** denote service level support for network traffic defined by classifier **504**. Thus, a network device incorporating the teachings of the present invention installs and removes filters and classifier profiles, defined in an admission policy database, on an as-needed, as-authorized basis, thereby limiting the network and device resources dedicated to supporting the differentiated services of an associated data network.

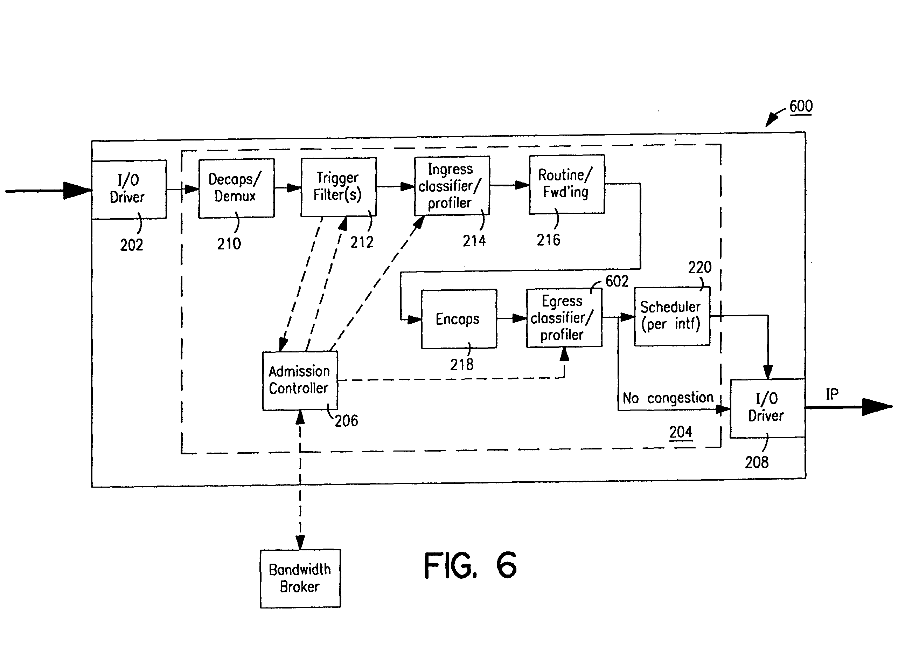

Turning next to **Figure 6**, an alternate embodiment of an example network device incorporating the teachings of the present invention is presented. Those skilled in the art will recognize that example network device **600** is similar to that of network device **200** presented above, with the notable exceptions that controller **206** is depicted integrated with network interface **204** and the addition of egress classifier/profiler **602.** Thus, those skilled in the art will appreciate that network device **600** controls the provision of differentiated services by dynamically installing/removing trigger filters and classifier profiles in accordance with an admission control policy. In doing so, network device 600, like network device 200 described more fully above, reduces the amount of network and management resources required to support the differentiated services, thereby reducing the overall cost associated with supporting such services.

In addition to the embodiments described above, those skilled in the art will appreciate that the teachings of the present invention may well be integrated with a single integrated circuit (not shown). That is, those skilled in the art will appreciate that advances in IC fabrication technology now enable complex systems to be integrated onto a single IC, Thus, in accordance with one embodiment of the present invention, the teachings of the present invention may be practiced within an application specific integrated circuits (ASIC), programmable logic devices (PLD), microcontroller, processor and the like.

While the innovative features for controlling access to network information sources of the present invention have been described in terms of the above illustrated embodiments, those skilled in the art will recognize that the invention is not limited to the embodiments described. The present invention can be practiced with modification and alteration within the scope of the appended claims. In particular, the present invention may be practiced with other features and/or feature settings. Particular examples of other features include but are not limited to transaction communication protocols and architectural attributes. Accordingly, the description is to be regarded as illustrative instead of restrictive on the present invention.

Thus, alternate methods and apparatus for dynamically controlling the provision of differentiated services incorporating the teachings of the present invention have been described.

## Claims

1. An apparatus used in communication between a client device and a remote device comprising:
a network interface (204) receiving a data packet in the communication between the client device and the remote device; and
a controller (206), coupled to the network interface (204), to dynamically create and remove a filter (212) in the network interface controlling access to different service levels based, at least in part, on an admission profile (222), the filter issuing a trigger notification denoting the received data packet satisfying filter criteria, the controller dynamically installing the admission profile for a particular service level upon reception of the trigger notification from the filter.

2. The apparatus of claim 1, wherein the filter (212), when issuing the trigger notification initiates an admission control decision preventing premature allocation of service level resources which are not yet required or authorized.

3. The apparatus of claim 2, wherein the filter (212) issues the trigger notification using information contained within the received data packet.

4. The apparatus of claim 3, wherein the filter (212) issues the trigger notification using one or both of packet source information and packet destination information.

5. The apparatus of claim 1, wherein the admission profile (222, 512-522) is stored in a communicatively coupled remote device.

6. The apparatus of claim 5, wherein the communicatively coupled remote device is a bandwidth broker (126) or other generic policy server.

7. The apparatus of claim 1, wherein the admission profile (222, 512-522) is available locally in the network interface.

8. The apparatus of claim 1, wherein the controller establishes an classifier (214) in response to detecting an associated trigger event, wherein the classifier (214) modifies the received data packet adhering to the filter criteria to denote a particular service level, in accordance with the admission profile (222, 500)

9. The apparatus of claim 8, wherein the controller removes the admission profile (222) after transmission of the received data packet is complete.

10. The apparatus of claim 8, wherein the controller removes the admission profile (222) after a predetermined period of time, liberating resources.

11. The apparatus of claim 1, wherein the controller (206) removes the filter (212) in accordance with a network administration policy.

12. The apparatus of claim 11, wherein the controller (206) removes the filter (212) based, at least in part, on time-of-day.

13. The apparatus of claim 1 wherein the network interface (204) comprises:
a classifier (214) communicatively coupled to the filter (212) to classify and mark the received data packet with one of the different service levels associated with the received data packet.

14. The apparatus of claim 13 wherein the classifier (214) marks a Type of Service (ToS) field (402) of the received data packet to denote a level of service for transmission of the data packet.

15. The apparatus of claim 1 wherein the controller (206) forwards the trigger notification received from the filter (212) to a bandwidth broker (126) if the admission profile (222, 500) is not installed so that the bandwidth broker (126) sends an appropriate admission profile (222, 500) to the controller for installation, upon looking up in an admission profile database.

16. The apparatus of claim 13 wherein the network interface (204) further comprises:
a routing unit (216) to identify and mark the data packet with routing information in accordance with a subscribed service level.

17. The apparatus of claim 13 wherein the network interface (204) further comprises:
an encapsulator and multiplexer (210) to place the data packet for transmission.

18. A method for controlling provision of differentiated services in a data network, the method comprising:
(a) installing a filter (212) on a network edge device (110, 118, 124) to provide a trigger notification upon detecting a data packet adhering to filter criteria, in accordance with a network admission profile; and
(b) dynamically creating an admission profile (222) which polices admission to a particular service level upon reception of the trigger notification from the filter.

19. The method of claim 18, further comprising (c) marking the data packet adhering to the filter criteria according to a subscribed service level.

20. The method of claim 18, wherein the admission police (222) polices admission to the particular service level by allowing only the data packet adhering to the filter criteria of the particular service level to proceed.

21. The method of claim 19, wherein marking of the data packet comprises setting a logic value in a Type of Service (ToS) field (402) of a header of the data packet.

22. The method of claim 19 further comprising:
(e) identifying and marking the data packet with routing information in accordance with the subscribed service level.

23. The method of claim 22 further comprising:
(f) placing the data packet for transmission.

24. The method of claim 18 further comprising:
(d2) issuing a command by a bandwidth broker (126) to a controller (206) of the network edge device (110, 118, 124) to dynamically install or remove the filter (212) in response to determining whether the received data packet satisfies the filter criteria.

## Patentansprüche

1. Eine bei einer Kommunikation zwischen einer Client-Einrichtung und einer fernen Einrichtung verwendete Einrichtung, mit:
einer bei der Kommunikation zwischen der Client-Einrichtung und der fernen Einrichtung ein Datenpaket empfangenden Netzwerkschnittstelle (204); und
einer mit der Netzwerkschnittstelle (204) gekoppelten Steuereinrichtung (206) zum dynamischen Erzeugen und Entfernen eines Filters (212) in der Netzwerkschnittstelle, das den Zugang zu verschiedenen Dienstebenen wenigstens teilweise auf der Basis eines Zugriffsprofils (222) steuert, wobei das Filter eine Trigger-Meldung ausgibt, welche anzeigt, dass das empfangene Datenpaket Filterkriterien erfüllt, wobei die Steuereinrichtung bei Empfang der Trigger-Meldung von dem Filter das Zugriffsprofil für eine bestimmte Dienstebene dynamisch installiert.

2. Die Einrichtung nach Anspruch 1, wobei das Filter (212) beim Ausgeben der Trigger-Meldung eine Zugriffskontrollentscheidung initiiert, welche eine frühzeitige Zuweisung von Dienstebenenressourcen vermeidet, die noch nicht benötigt werden oder noch nicht autorisiert sind.

3. Die Einrichtung nach Anspruch 2, wobei das Filter (212) die Trigger-Meldung unter Verwendung von in dem empfangenen Datenpaket enthaltenen Informationen ausgibt.

4. Die Einrichtung nach Anspruch 3, wobei das Filter (212) die Trigger-Meldung unter Verwendung von Paketquelleninformationen und/oder Paketzielinformationen ausgibt.

5. Die Einrichtung nach Anspruch 1, wobei das Zugriffsprofil (222, 512-522) in einer kommunikativ gekoppelten fernen Einrichtung gespeichert ist.

6. Die Einrichtung nach Anspruch 5, wobei die kommunikativ gekoppelte ferne Einrichtung ein Bandwidth Broker (126) oder ein anderer generischer Policy Server ist.

7. Die Einrichtung nach Anspruch 1, wobei das Zugriffsprofil (222, 512-522) in der Netzwerkschnittstelle lokal verfügbar ist.

8. Die Einrichtung nach Anspruch 1, wobei die Steuereinrichtung einen Klassifizierer (214) als Reaktion auf das Erfassen eines zugehörigen Trigger-Ereignisses einrichtet, wobei der Klassifizierer (214) das empfangene, die Filterkriterien einhaltende Datenpaket entsprechend dem Zugriffsprofil (222, 500) modifiziert, um eine bestimmte Dienstebene anzuzeigen.

9. Die Einrichtung nach Anspruch 8, wobei die Steuereinrichtung das Zugriffsprofil (222) nach dem Abschluss der Übertragung des empfangenen Datenpakets entfernt.

10. Die Einrichtung nach Anspruch 8, wobei die Steuereinrichtung das Zugriffsprofil (222) nach einer vorgegebenen Zeitdauer entfernt, wobei Ressourcen freigegeben werden.

11. Die Einrichtung nach Anspruch 1, wobei die Steuereinrichtung (206) das Filter (212) einer Netzwerk-Administrations-Policy entsprechend entfernt.

12. Die Einrichtung nach Anspruch 11, wobei die Steuereinrichtung (206) das Filter (212) wenigstens teilweise basierend auf der Tageszeit entfernt.

13. Die Einrichtung nach Anspruch 1, wobei die Netzwerkschnittstelle (204) aufweist:
einen mit dem Filter (212) kommunikativ gekoppelten Klassifizierer (214), um das empfangene Datenpaket zu klassifizieren und mit einer von den verschiedenen Dienstebenen zu markieren, die dem empfangenen Datenpaket zugeordnet sind.

14. Die Einrichtung nach Anspruch 13, wobei der Klassifizierer (214) ein Diensttyp(Type of Service-ToS)-Feld (402) des empfangenen Datenpakets markiert, um eine Dienstebene für die Übertragung des Datenpakets anzuzeigen.

15. Die Einrichtung nach Anspruch 1, wobei die Steuereinrichtung (206) die von dem Filter (212) empfangene Trigger-Meldung an einen Bandwidth Broker (126) sendet, wenn das Zugriffsprofil (222, 500) nicht installiert ist, so dass der Bandwidth Broker (126) nach dem Suchen in einer Zugriffsprofildatenbank ein geeignetes Zugriffsprofil (222, 500) für die Installation an die Steuereinrichtung sendet.

16. Die Einrichtung nach Anspruch 13, wobei die Netzwerkschnittstelle (204) ferner aufweist:
eine Routingeinheit (216) zum Identifizieren und Markieren des Datenpakets mit Routinginformationen entsprechend einer vereinbarten Dienstebene.

17. Die Einrichtung nach Anspruch 13, wobei die Netzwerkschnittstelle (204) ferner aufweist:
einen Encapsulator und Multiplexer (210) zum Platzieren des Datenpakets für die Übertragung.

18. Ein Verfahren zum Steuern der Bereitstellung von differenzierten Diensten in einem Datennetzwerk, wobei das Verfahren umfasst:
(a) dass ein Filter (212) auf einer Network-Edge-Einrichtung (110, 118, 124) installiert wird, um bei Erfassen eines Filterkriterien einhaltenden Datenpakets eine Trigger-Meldung entsprechend einem Netzwerkzugriffsprofil bereitzustellen; und
(b) dass dynamisch ein Zugriffsprofil (222) erzeugt wird, welches bei Empfang der Trigger-Meldung von dem Filter den Zugriff auf eine bestimmte Dienstebene kontrolliert.

19. Das Verfahren nach Anspruch 18, ferner umfassend (c), dass das die Filterkriterien einhaltende Datenpaket entsprechend einer vereinbarten Dienstebene markiert wird.

20. Das Verfahren nach Anspruch 18, wobei das Zugriffsprofil (222) den Zugriff auf die bestimmte Dienstebene kontrolliert, indem nur dem die Filterkriterien der bestimmten Dienstebene einhaltenden Datenpaket das Fortschreiten erlaubt wird.

21. Das Verfahren nach Anspruch 19, wobei das Markieren des Datenpakets umfasst, dass ein logischer Wert in einem Diensttyp(Type of Service-ToS)-Feld eines Headers des Datenpakets gesetzt wird.

22. Das Verfahren nach Anspruch 19, ferner umfassend:
(e) dass das Datenpaket identifiziert und mit Routinginformationen entsprechend der vereinbarten Dienstebene markiert wird.

23. Das Verfahren nach Anspruch 22, ferner umfassend:
(f) dass das Datenpaket für die Übertragung plaziert wird.

24. Das Verfahren nach Anspruch 18, ferner umfassend:
(d2) dass ein Befehl von einem Bandwidth Broker (126) an eine Steuereinrichtung (206) der Network-Edge-Einrichtung (110, 118, 124) ausgegeben wird, um das Filter (212) als Reaktion auf das Bestimmen, ob das empfangene Datenpaket die Filterkriterien erfüllt, dynamisch zu installieren oder zu entfernen.

## Revendications

1. Appareil utilisé dans une communication entre un dispositif client et un dispositif distant comprenant :
- une interface (204) de réseau recevant un paquet de données dans la communication entre le dispositif client et le dispositif distant ; et
- un dispositif de commande (206), couplé à l'interface (204) de réseau, afin de créer et de retirer de manière dynamique un filtre (212) dans l'accès de commande à l'interface de réseau vers différents niveaux de service basés, au moins en partie, sur un profil d'admission (222), le filtre délivrant une notification de déclenchement signifiant le paquet de données reçues satisfaisant des critères de filtre, le dispositif de commande installant de manière dynamique le profil d'admission pour un niveau de service particulier après réception de la notification de déclenchement en provenance du filtre.

2. Appareil selon la revendication 1, dans lequel le filtre (212), lorsqu'il délivre la notification de déclenchement, lance une décision de commande d'admission empêchant une allocation prématurée de ressources de niveau de service qui ne sont pas encore requises ou autorisées.

3. Appareil selon la revendication 2, dans lequel le filtre (212) délivre la notification de déclenchement en utilisant des informations contenues dans le paquet de données reçues.

4. Appareil selon la revendication 3, dans lequel le filtre (212) délivre la notification de déclenchement en utilisant une ou les deux parmi les informations de source de paquet et les informations de destination de paquet.

5. Appareil selon la revendication 1, dans lequel le profil d'admission (222, 512-522) est mémorisé dans un dispositif distant couplé de façon à communiquer.

6. Appareil selon la revendication 5, dans lequel le dispositif distant couplé de façon à communiquer est un courtier (126) de bande passante ou un autre serveur à politique générique.

7. Appareil selon la revendication 1, dans lequel le profil d'admission (222, 512-522) est disponible localement dans l'interface de réseau.

8. Appareil selon la revendication 1, dans lequel le dispositif de commande établit un classifieur (214) en réponse à la détection d'un événement de déclenchement associé, dans lequel le classifieur (214) modifie le paquet de données reçues adhérant aux critères de filtre afin de signifier un niveau de service particulier, conformément au profil (222, 500) d'admission.

9. Appareil selon la revendication 8, dans lequel le dispositif de commande retire le profil d'admission (222) après qu'une transmission du paquet de données reçues soit achevée.

10. Appareil selon la revendication 8, dans lequel le dispositif de commande retire le profil d'admission (222) après une période prédéterminée de temps, libérant des ressources.

11. Appareil selon la revendication 1, dans lequel le dispositif de commande (206) retire le filtre (212) conformément à une politique d'administration de réseau.

12. Appareil selon la revendication 11, dans lequel le dispositif de commande (206) retire le filtre (212) basé, au moins en partie, sur une heure locale.

13. Appareil selon la revendication 1, dans lequel l'interface (204) de réseau comprend un classifieur (214) couplé, de façon à communiquer, au filtre (212) afin de classer et de marquer le paquet de données reçues avec un des niveaux de service différents associé au paquet de données reçues.

14. Appareil selon la revendication 13, dans lequel le classifieur (214) marque un champ (402) de Type de Service (ToS) du paquet de données reçues afin de signifier un niveau de service pour une transmission du paquet de données.

15. Appareil selon la revendication 1, dans lequel le dispositif de commande (206) fait suivre la notification de déclenchement reçue depuis le filtre (212) vers un courtier (126) à bande passante si le profil (222, 500) d'admission n'est pas installé de telle sorte que le courtier (126) de bande passante envoie un profil (222, 500) d'admission approprié vers le dispositif de commande pour une installation, après recherche d'une base de données de profil d'admission.

16. Appareil selon la revendication 13, dans lequel l'interface (204) de réseau comprend en outre une unité (216) de routage afin d'identifier et de marquer le paquet de données avec des informations de routage conformément à un niveau de service souscrit.

17. Appareil selon la revendication 13, dans lequel l'interface (204) de réseau comprend en outr un encapsulateur et un multiplexeur (210) afin de placer le paquet de données pour une transmission.

18. Procédé destiné à commander une provision de services différenciés dans un réseau de données, le procédé comprenant les étapes consistant à :
(a) installer un filtre (212) sur un commutateur d'accès (110, 118, 124) de réseau afin de fournir une notification de déclenchement après la détection d'un paquet de données adhérant aux critères de filtre, conformément à un profil d'admission de réseau ; et
(b) créer de manière dynamique un profil d'admission (222) qui surveille une admission vers un niveau de service particulier après réception de la notification de déclenchement provenant du filtre.

19. Procédé selon la revendication 18, comprenant en outre (c) le marquage du paquet de données adhérant aux critères de filtre selon un niveau de service souscrit.

20. Procédé selon la revendication 18, dans lequel le profil d'admission (222) surveille une admission vers un niveau de service particulier en autorisant uniquement le paquet de données adhérant aux critères de filtre du niveau de service particulier à entreprendre.

21. Procédé selon la revendication 19, dans lequel le marquage du paquet de données comprend le réglage d'une valeur logique dans un champ (402) de Type de Service (ToS) d'un en-tête du paquet de données.

22. Procédé selon la revendication 19, comprenant en outre l'étape consistant à :
(e) identifier et marquer le paquet de données avec des informations de routage conformément au niveau de service souscrit.

23. Procédé selon la revendication 22, comprenant en outre l'étape consistant à :
(f) placer le paquet de données pour une transmission.

24. Procédé selon la revendication 18 comprenant en outre l'étape consistant à :
(d2) délivrer un ordre par un courtier (126) de bande passante vers un dispositif de commande (206) du commutateur d'accès (110, 118, 124) de réseau afin d'installer ou de retirer de manière dynamique le filtre (212) en réponse au fait de déterminer si le paquet de données reçues satisfait ou non les critères de filtre.
